# EUROPEAN PATENT SPECIFICATION

(11) **EP 0 624 311 B1**
(45) Date of publication and mention of the grant of the patent: **29.12.1999**
(21) Application number: 94201308.7
(22) Date of filing: 10.05.1994
(51) Int. Cl.: A01F 25/20, A01K 5/02, A01D 90/10

(54) **A device and a method for transporting and delivering fodder**
Vorrichtung und Verfahren um Futter zu Befördern und zu Verteilen
Appareil et méthode pour transporter et décharger du fourrage

(30) Priority: 13.05.1993 NL 9300823
(43) Date of publication of application: 17.11.1994
(73) Proprietor: Trioliet Mullos B.V., NL-7581 HE Losser (NL)
(72) Inventor: Van der Plas, Nicolaas, NL-7576 Wbb Oldenzaal (NL)
(74) Representative: Louet Feisser, Arnold

(56) References cited:
- DE-A- 3 929 047
- FR-A- 2 616 041
- FR-A- 2 634 345

## Description

The invention relates to a device for transporting and delivering fodder or the like material, for example silage material, said device being movable and having at least one opening for delivering the fodder, said opening being provided with a cover flap which is capable of at least partially covering the opening, whereby a conveyor is provided, for example a bottom chain, or a conveyor belt, which is capable of displacing the fodder towards the opening, whereby the cover flap of the opening can be operated by remote control. Near the opening also a further driven mechanical device to treat or to dose the fodder may be present, for example a roller. Such device is disclosed in FR-A-2,634,345.

A device of this type is generally provided with a hopper in which the silage material to be transported to the feeding place may be deposited. For that purpose the device may be provided with a cutting or sawing apparatus for detaching the silage material, and possibly with special means for depositing said material into said hopper. The device may furthermore be provided with means for loosening the silage material, for example rotatable rollers provided with catch means.

Usually such a device is furthermore provided with a roller or a pair of rollers, which may deposit the silage material from the hopper onto the conveyor, for example in the form of a bottom chain or a conveyor belt, which transports the silage material towards the opening of the device when the device is present at the feeding place. Frequently such a device is provided with two openings on either side of the device, so that an amount of fodder may be delivered from each side of the device, as desired, whilst the device is moving along the feeding places.

The openings of such a device may be provided with a cover flap, on the one hand in order to prevent undesirable falling out of silage material, whilst on the other hand safety is enhanced because the opening is no longer accessible.

The object of the invention is to obtain a device for transporting and delivering fodder or the like material, whereby said delivering of fodder may take place in a safe and efficient manner.

In order to accomplish this objective the cover flap of the opening is controlled by a control mechanism operated by the remote control, which control mechanism includes a hydraulic control cylinder to operate the cover flap and a hydraulic valve for switching off the conveyor drive when the cover flap is not in its entirely or nearly entirely open position. For example, as soon as a certain pushing force is exerted on the open cover flap, so that it will move inwardly some distance, the conveyor drive will be disengaged, so that on the one hand safety is enhanced and on the other hand no fodder can accumulate behind the cover flap.

When the device is provided with at least two openings for delivering fodder, whereby each of said two openings is provided with a remotely controlled cover flap, which may at least partially cover the openings, the device may according to another aspect of the invention be provided with locking means, which lock one cover flap against being opened when the other cover flap is open. The control mechanism for a cover flap may thereby have a first position, in which the cover flap is opened, a second position, in which the cover flap is closed, and a third position, in which the cover flap is locked. In this way it may be prevented that, for whatever reason, one cover flap is opened and thus an opening becomes accessible, whilst fodder is being delivered through another opening whose cover flap is open.

According to one aspect of the invention the control mechanism may comprise spring means, in such a manner that in its closed, non-locked position the cover flap can be opened against spring tension.

According to another aspect of the invention two cover flaps may be interconnected by mechanical means, in order to effect said locking. This connection may have been effected by means of a link system and/or by means of cables, in such a manner that the connection is long enough to open a cover flap, but does not leave any space for the other cover flap to open.

According to another aspect of the invention the two cover flaps may be controlled by means of a hydraulic control cylinder, which may effect a movement from a central position in two directions, said movement in either direction opening one cover flap and locking the other cover flap. The moving part of the control cylinder may thereby be connected with the mechanical link between the two cover flaps, so that, when the control cylinder moves in one of said directions, whereby one cover flap is opened, the mechanical link with the other cover flap is tensioned in such a manner that said other cover flap cannot be opened any more.

According to one aspect of the invention the cover flap may be pivoted about a substantially horizontal pivot pin, which is positioned above the opening, whereby said cover flap is on either side provided with guard plates extending substantially perpendicularly to said pivot pin, said guard plates partially screening the opening in the open position of the cover flap. As a result of that it is difficult to gain access to the opening in question, in spite of the open position of the cover flap, whilst the fodder can pass the opening without impediment. When there is not sufficient space available inside the device for such a guard plate in the closed position of the cover flap, the guard plate may according to another aspect of the invention be designed such that it can fold in a fan-like manner. The guard plate thereby consists of two or more segments, which may slide on each other, so that in the closed condition of the cover flap the guard plate occupies little space.

The transport means can be driven in two directions, in each direction for supplying fodder towards one of the openings, whereby according to one aspect of the invention the control means have a position of rest, in which the drive of the transport means is locked and the two cover flaps are closed, and two operative positions, in which respectively one cover flap is open, whilst the other cover flap is locked and the transport means are driven in the direction of the open cover flap. As a result of this a very safe device has been obtained, whereby the conveyor can only come into operation in case one of the cover flaps is in its locked, closed position. Only the other cover flap, towards which the transport means are moving the fodder, is open thereby.

The invention furthermore relates to a hydraulic control system for a device for transporting and delivering fodder, which control system is provided with a hydraulic control valve, which is capable of controlling a hydraulic control cylinder, which controls the position of the cover flap as well as the conveyor drive.

When the device comprises at least two cover flaps, each of said cover flaps may according to the invention be connected to the control cylinder via a mechanical connection, for example a link system, said mechanical connection comprising spring means, in such a manner that in the central position of the control cylinder both cover flaps are closed and can be opened against spring tension, and that in either one of the operating positions respectively one cover flap can be opened, whilst the other cover flap is locked against being opened by tensioning of the respective spring means. The control cylinder may thereby consist of a fixedly disposed cylinder and a piston which is movable therein.

According to another aspect of the invention a hydraulic motor may be present for driving a conveyor, whereby a hydraulic control valve is connected to the control cylinder, so that the supply of fluid to and from the motor is only allowed when the control cylinder is in a position in which one cover flap is entirely or nearly entirely open.

The invention furthermore relates to a method for transporting and delivering fodder or the like material, for example silage material, wherein the fodder may be delivered from a hopper through an opening by means of a conveyor, whereby one cover flap of the opening has been opened by a remotely controlled control mechanism, whereby said control mechanism controls the conveyor drive in such a manner, that said drive is switched off when the cover flap is moved from the entirely open position by a certain distance.

The fodder may thereby be delivered from a hopper through one of a plurality of openings, whereby a cover flap of the opening in question has been opened by a remotely controlled control mechanism, whereby according to the invention the cover flap of the other opening is simultaneously locked against being opened. According to another aspect of the invention the same control mechanism may also control a conveyor for supplying fodder to the opening which is in its open position.

In order to more fully explain the invention some embodiments of the device will be described hereafter with reference to the drawing.
- Figure 1 is a perspective view of at least a part of the device;
- Figures 2 and 3 each show a diagram of the hydraulic system for the control of one cover flap; and
- Figures 4 and 5 each show a diagram of the hydraulic system for the control of two cover flaps.
- Figure 6 and 7 show another embodiment of the invention, in which one cover flap is controlled.
- Figures 8,9 and 10 show another embodiment of the invention, in which two cover flaps are controlled.

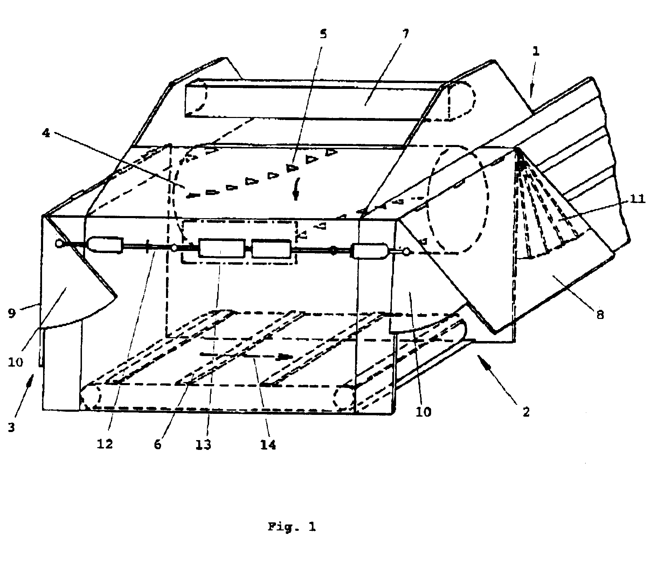

In the figures the device is only shown diagrammatically, whereby for the sake of clarity parts have been left out, are illustrated in transparent view or are only diagrammatically indicated, in particular in Figure 1.

The device according to Figure 1 may be mobile or be constructed in such a manner that it can be suspended in the three-point linkage of a tractor. The means for moving the device are not shown in Figure 1, because only those parts that are relevant for the invention are illustrated in said Figure.

The device is provided with a hopper 1, in which fodder, for example silage, may be deposited, which fodder is to be delivered at the feeding place for the animals through the openings 2, 3, which are present on either side of the device. For that purpose a metering roller 4 is present, which can rotate in the direction indicated by the arrow and which is provided with catch means 5, so that the fodder is on the one hand loosened and on the other hand deposited on a bottom chain 6, which is movable in a direction transversely to the device. Above the metering roller 4 a further means 7 may be provided, for example a roller or gripping means, which may or not be movable, as a result of which the fodder is further loosened and/or metering of the fodder during the transport to the bottom chain 6 is facilitated.

The two openings 2, 3, through which the fodder can be delivered, are each provided with a cover flap 8, 9. In Figure 1 the cover flap 8 of opening 2 is shown in open condition, whilst the cover flap 9 is illustrated in closed condition. The dimensions of the cover flap 8, 9 are such that the openings 2, 3 can be closed entirely or nearly entirely. In order not to release the opening any further than is necessary for delivering fodder in the open position of the cover flap 8, 9, guard plates 10, 11 are provided, which are segmented and which screen the opening in such a manner that it is not accessible to the operators.

The guard plate 11 may be constructed in such a manner that a number of segments may slide on each other in a fan-like manner, so that the space occupied by the guard plate 11 is reduced in the closed position of the cover flap.

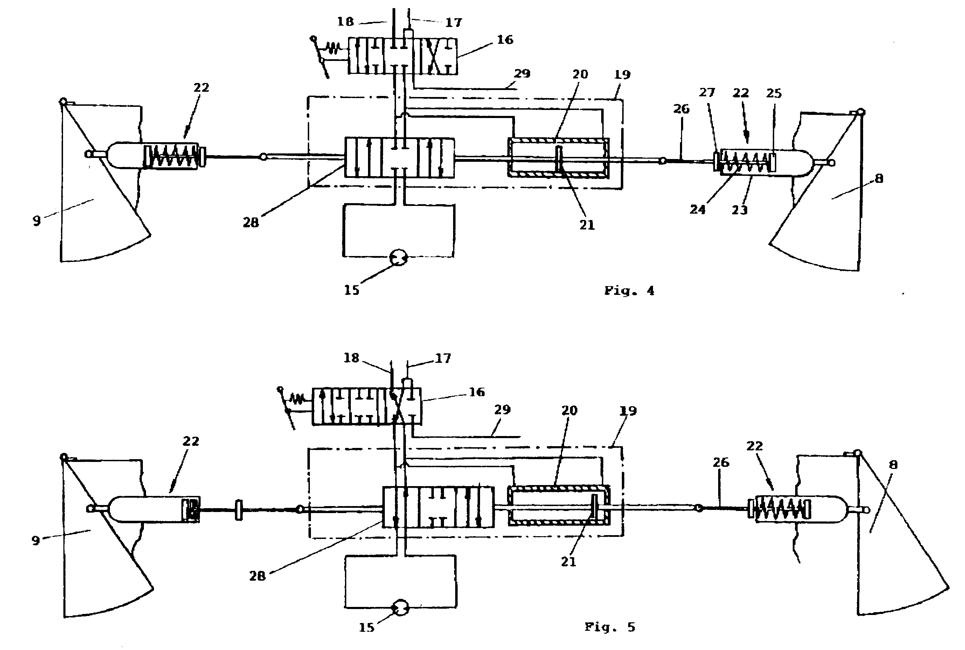

The two cover flaps 8, 9 are interconnected by means of a link system 12, which is pivotally mounted in the guard plates 10. The link system 12 and the hydraulic system 13, which is likewise only diagrammatically indicated, will be explained in more detail with reference to Figures 4 and 5.

Figure 1 shows the device in a situation such that the cover flap 8 is open and the cover flap 9 is closed. This situation has been effected by means of the hydraulic system 13, which is yet to be explained in more detail hereafter. This hydraulic system 13 also controls the bottom chain 6, so that said bottom chain can only move in the direction of the open cover flap 8, as indicated by the arrow 14. In the situation of the device as shown in Figure 1 the cover flap 9 is locked against being opened and the bottom chain 6 can only be driven in the direction of the arrow 14, that is in the direction of the open flap 8.

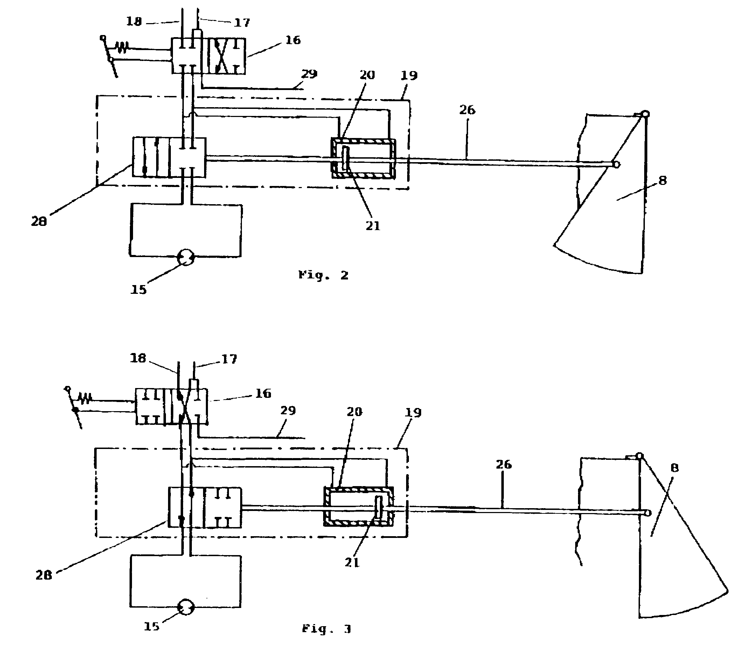

Figures 2 and 3 illustrate the control mechanism for a device having one cover flap 8 and of the hydraulic motor 15 for driving the bottom chain 6. Figure 2 thereby shows the situation in which cover flap 8 is closed, whilst the motor 15 for driving the bottom chain 6 is locked. Figure 3 shows the situation in which the cover flap 8 is opened, whilst the motor 15 drives the bottom chain 6.

Figures 2 and 3 show a control valve 16, which may for example be provided in the cabin of a tractor to which the device is attached. The control valve 16 may be put in two positions by the operator, whereby the supply line 17 for the hydraulic fluid and the discharge line 18 may or may not be connected to the control mechanism for the cover flap 8, which is illustrated within the chain-dotted line 19, and the motor 15.

The control mechanism consists of a hydraulic cylinder 20, which has a fixed position in the device, and a control valve 28.

The piston 21 of the cylinder 20 is connected, by means of a link 26, to the cover flap 8 as well as to a hydraulic control valve 28, by which the motor 15 may be controlled for driving the bottom chain 6. In the left-hand position of the piston 21, as illustrated in Figure 2, the control valve 28 blocks the supply of and the discharge of fluid to and from the hydraulic motor 15, so that the drive of the bottom chain 6 is locked. The locking of said drive is released only when the cover flap 8 is entirely or nearly entirely in its open position, as shown in Figure 3.

When the cover flap 8 is closed to a certain extent from the position shown in Figure 3, for example by hand, the control valve 28 will be moved to the left via the link 26, so that the drive by the motor 15 is interrupted. The force with which the cover flap 8 can be closed is determined by the fluid pressure within the cylinder 20. Furthermore spring means may be provided for determining this force.

Figures 4 and 5 show the control mechanism of two cover flaps 8, 9 and of the hydraulic motor 15 for driving the bottom chain 6. Figure 4 thereby shows the situation in which the two cover flaps 8, 9 are closed but not locked, whilst the drive of the bottom chain 6 by the motor 15 is locked. Figure 5 illustrates the situation in which the cover flap 8 is open, the cover flap 9 is blocked whilst the motor 15 drives the bottom chain 6.

Figures 4 and 5 show a control valve 16, which may for example be provided in the cabin of a tractor to which the device is attached. The control valve 16 may be put in three positions by the operator, whereby the supply line 17 for the hydraulic fluid and the discharge line 18 may or may not be connected to the control mechanism for the cover flaps 8,9, which is illustrated within the chain-dotted line 19, and the motor 15.

The control mechanism consists of a hydraulic cylinder 20, which has a fixed position in the device. A piston 21 is present inside the hydraulic cylinder 20, said piston being illustrated in its central position in Figure 4. The piston 21 is connected to a mechanical spring unit 22 substantially consisting of a housing 23, which is pivotally connected to the cover flap 8. A coil spring 24 is present within the housing, said coil spring on the one hand being supported on the housing 23 and on the other hand on a stop 25, which is connected to the piston 21 via the link 26. A stop 27 is positioned on the link 26, which stop may bear against the housing 22 when the coil spring 24 has its maximum length.

It will be apparent that in the rest position, as illustrated in Figure 4, the spring unit 22 forms a springing element, as a result of which the cover flap 8 can be opened, for example by hand, against the tension of the coil spring 24. When the piston 21 inside the cylinder 20 moves to the right, the cover flap 8 will be opened, because the stop 27 bears against the housing 23 and is thereby capable of transmitting the necessary force (this is illustrated in Figure 5, on the right-hand side).

When on the contrary the piston 21 moves to the left, seen in Figure 4, the cover flap 8 will remain closed. The stop 25 is thereby pulled to the left, as a result of which the coil spring 24 is tensioned and that in such a manner that the cover flap 8 cannot be opened any more (this situation is illustrated in Figure 5, on the left-hand side).

The piston 21 is connected, by means of a link system, to the cover flaps 8 and 9 as well as to a hydraulic control valve 28, by which the motor 15 can be controlled for driving the bottom chain 6. In the central position of the piston 21 as illustrated in Figure 4 the control valve 28 blocks the supply of and the discharge of fluid to and from the hydraulic motor 15, so that the bottom chain 6 is locked. The bottom chain 6 is always stationary, therefore, when one of the cover flaps 8, 9 has been closed in such a manner that it can be opened by hand. Only when one of the cover flaps 8, 9 is in its locked position, as for example illustrated in Figure 5, can the bottom 6 be driven, and that in a direction which is determined by the control valve 16. As a result of that the bottom chain can only be driven in the direction of the open cover flap 8 (see Figure 5).

Figure 5 shows the situation in which the cover flap illustrated on the right is open, so that fodder can be delivered on that side. When, for whatever reason, a pushing force is exerted on said cover flap, so that it is closed a little, this movement will be transmitted via the link 26 to the control valve 28, which will then move to the left in such a manner, that the supply and discharge of fluid to and from the hydraulic motor 15 is interrupted. The drive of the bottom chain 6 is stopped, therefore, when the cover flap is being closed. This is significant both from a functional point of view and from a point of view of the safety of the device.

It will be apparent, that three positions may be set by means of the control valve 16, namely a central position, in which the two cover flaps 8, 9 are closed, the motor 15 is locked and the hydraulic fluid supplied through the supply line 17 may be discharged by means of the return line 29, and two operative positions, whereby in each position a cover flap is opened, the other cover flap is locked, whilst the motor 15 drives the bottom chain 6 in the direction of the open cover flap.

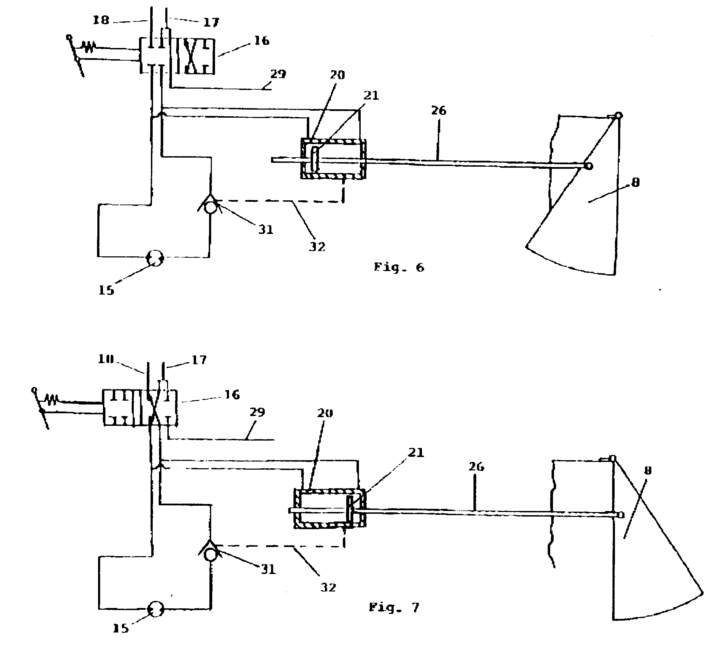

Figures 6 and 7 show an example of an embodiment in which hydraulic motor 15 is controlled by a valve 31, which valve 31 is hydraulically controlled by cylinder 20. Figure 6 shows the closed position of cover flap 8. This closed position of cover flap 8 is maintained for example by spring means which are not shown in the figure. By moving control valve 16 to the left, as shown in figure 7, hydraulic fluid from supply line 17 will move piston 21 to the right and mechanical link 26 will open cover flap 8. In that position of cylinder 21, hydraulic control line 32, shown as a dotted line, will supply fluid pressure from supply line 17 to the controlled one way valve 31. Valve 31 is a one way valve as long as no hydraulic pressure is supplied by control line 32. In that case no hydraulic fluid will pass motor 15, so that motor 15 cannot move bottom chain 6 (this position is shown in figure 6).

In the position as shown in figure 7 valve 31 is opened by fluid pressure through control line 32, so that fluid can pass valve 31 in both directions and therefore motor 14 will drive the bottom chain 6. At the moment that piston 21 is moved to the left, by operating control valve 16 or by pushing cover flap 8 down, then immediately control line 32 will be connected with discharge line 18, so that valve 31 will close and motor 15 will stop.

Figures 8-10 show an embodiment in which two cover flaps 8,9 are controlled, as described before with reference to figures 4 and 5. Motor 15 can drive bottom chain 6 in both directions, i.e. towards each of the two fodder discharge openings. Furthermore two motors 34,35 are present, each for driving a mechanical device for treating the fodder near the discharge opening. Such device may be a roller for loosening and/or dosing the fodder to be discharged. Such device must stop moving at the moment that the cover flap 8,9 is pressed downwardly. Therefore, in this embodiment any movement of the bottom chain and of each of the mechanical devices is blocked, unless one of the cover flaps 8,9 is fully open.

According to figures 8-10 hydraulic cylinder 20 is provided with two interconnected pistons 36,37 on a piston rod 38, which piston rod 38 is connected with both cover flaps 8,9 as shown in figures 4 and 5. Apart from motor 15 for driving the bottom chain in both directions two other hydraulic motors 34,35 are present. One way valves 39,40 prevent each one of motors 34,35 to move in the wrong direction and valves 41,42 can be opened by control lines 43,44 to supply hydraulic fluid to each of the motors 34,35.

Figure 8 shows the position in which both cover flaps 8,9 are closed and piston assembly 36,37,38 is in the middle position. Such middle position can be maintained by spring means or other means, not being shown in the figures. Also control valve 16 is in the middle position, so that no fluid is supplied to the system.

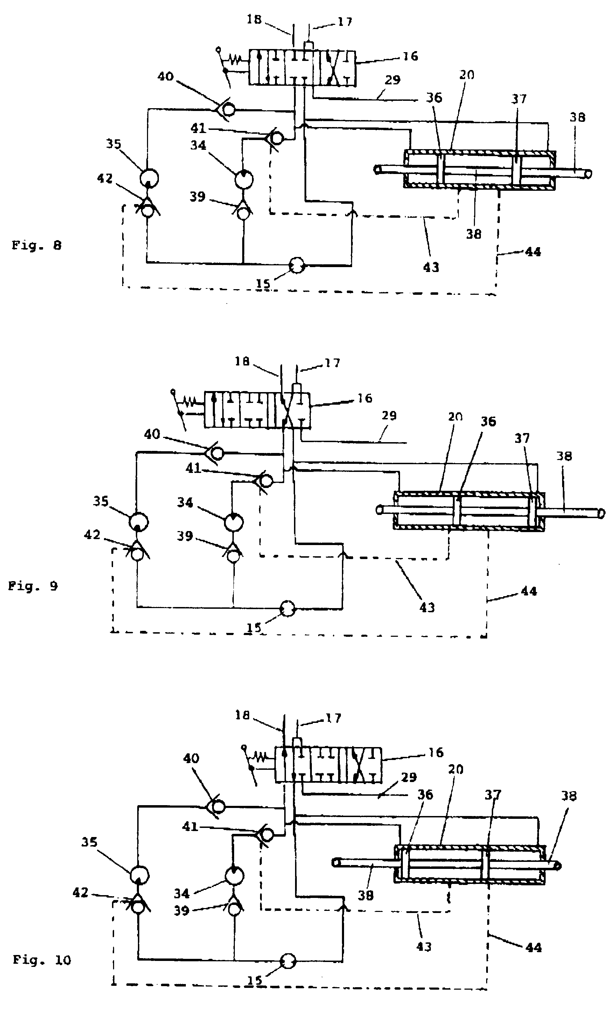

Figure 9 shows the position in which control valve 16 is moved to the left, so that supply line 17 is connected to the left side of hydraulic cylinder 20 and therefore piston assembly 36,37,38 is moved to the right, whereby opening the cover flap 8 of the right fodder discharge opening (see fig. 5). Furthermore control line 43 is supplying fluid pressure to valve 41, so that valve 41 opens and the hydraulic fluid will flow through motor 34, motor 15 and back to discharge line 18. So, motor 34 will drive the mechanical device near the right discharge opening while motor 15 drives the bottom chain 6 in the direction of said discharge opening. In case the cover flap 8 is pressed downwardly, piston assembly 36,37,38 is moved to the left and control line 43 is released from pressure, so that valve 41 closes and both motors 15,34 are blocked.

Figure 10 shows the position in which control valve 16 is moved to the right, so that supply line 17 is connected to the right side of control cylinder 20. Therefore the piston assembly 36,37,38 is urged to the left and the left side cover flap 9 will open. Furthermore control line 44 supplies fluid pressure to valve 42, so that hydraulic fluid, supplied by supply line 17, can flow through motor 15 in the opposite direction so that the bottom chain 6 will supply fodder to the left fodder discharge opening. The hydraulic fluid also pass motor 35 which drives the mechanical device near the left side fodder discharge opening. Also here, a comparative small displacement of the open cover flap 9 will block the drives of the bottom chain 6 and the said mechanical device.

As said before, each opening may be provided with a driven mechanical device to treat or to dose the fodder. In case that the drive of the conveyor is switched off, also the drive of the mechanical device can be switched off simultaneously. However, according to the invention, instead of the conveyor drive, the drive of the mechanical device can be switched off.

## Claims

1. A device for transporting and delivering fodder or the like material, for example silage material, said device being movable and having at least one opening (2,3) for delivering the fodder, said opening being provided with a cover flap (8,9) which is capable of at least partially covering the opening (2,3), whereby a conveyor is provided, for example a bottom chain (6) or a conveyor belt, which is capable of displacing the fodder towards the opening (2,3), whereby the cover flap (8,9) of the opening (2,3) can be operated by remote control (16) characterized in that the cover flap (8,9) is controlled by a control mechanism (19) operated by the remote control (16)_{,} which control mechanism (19) includes a hydraulic control cylinder (20,21) to operate the cover flap (8,9) and a hydraulic valve (28,31,41,42) for switching off the conveyor drive (15) when the cover flap (8,9) is not in its entirely or nearly entirely open position.

2. A device according to claim 1, said device being provided with at least two openings (2,3) for delivering fodder, whereby each of said two openings (2,3) is provided with a remotely controlled cover flap (8,9), which may at least partially cover the openings (2,3), characterized in that locking means are provided, which lock one cover flap (8,9) against being opened when the other cover flap (8,9) is open.

3. A device according to any one of the preceding claims, characterized in that the hydraulic control cylinder (20) for a cover flap (8,9) has a first position, in which the cover flap (8,9) is opened, a second position, in which the cover flap (8,9) is closed, and a third position, in which the cover flap (8,9) is locked in the closed position.

4. A device according to claim 3, characterized in that said hydraulic control cylinder (20) is connected to spring means (24), in such a manner that in said second position the cover flap (8,9) can be opened against spring tension.

5. A device according to any one of the claims 2 - 4, characterized in that the two cover flaps (8,9) are interconnected by mechanical means (21,22,26), in order to effect said locking.

6. A device according to any one of the claims 2 - 5, characterized in that the two cover flaps (8,9) is controlled by means of the hydraulic control cylinder (20), which may effect a movement from a central position in two directions, said movement in either direction opening one cover flap (8,9) and locking the other cover flap (9,8).

7. A device according to any one of the preceding claims, characterized in that the cover flap (8,9) is pivoted about a substantially horizontal pivot axis, which is positioned above the opening (2,3), and that said cover flap (8,9) is on either side provided with guard plates (11) extending substantially perpendicularly to said pivot axis, said guard plates (11) partially screening the opening (2,3) in the open position of the cover flap (8,9).

8. A device according to claim 7, characterized in that at least one of said guard plates (11) can be dimensionally reduced in a fan-like manner.

9. A device according to any one of the claims 2 - 8, characterized in that said conveyor (6) can be driven in two directions, in each direction for supplying fodder towards one of the openings (2,3), whereby the hydraulic valve (28) have a position of rest, in which the drive of the conveyor (6) is locked and the two cover flaps (8,9) are closed, and two operative positions, in which respectively one cover flap (8,9) is open, whilst the other cover flap (9,8) is locked and the conveyor (6) are driven in the direction of the open cover flap (8,9).

10. A device according to claim 9, characterized in that near each opening (2,3) a driven mechanical device (4) is provided to treat or to dose the fodder to be discharged and that the same remote control (16) controls the said device (4) and the conveyor (6) and the cover flaps (8,9).

11. A method for transporting and delivering fodder or the like material, for example silage material, wherein the fodder is delivered from a hopper through an opening (2,3) by means of a conveyor (6), whereby a cover flap (8,9) of the opening (2,3) has been opened by a control mechanism (19) which is controlled by a remote control (16), whereby said control mechanism (19) controls the conveyor drive (15), in such a manner, that said drive is switched off when the cover flap (8,9) is moved from the entirely open position by a predetermined distance.

12. A method according to claim 11, characterized in that when a cover flap (8,9) of the opening (2,3) has been opened, the cover flap (9,8) of an other opening (3,2) is simultaneously locked against being opened.

13. A method according to claim 11 or 12, characterized in that said control mechanism (19) has a position in which a cover flap (8,9) can be opened by hand and that said control mechanism (19) locks the conveyor drive (15) and/or another mechanical device when said control mechanism (19) is in said position.

## Patentansprüche

1. Vorrichtung zum Transport und zur Abgabe von Futter oder dergleichen Material, beispielsweise Silagematerial, wobei die Vorrichtung mobil ist und wenigstens eine Öffnung (2, 3) zur Abgabe des Futters aufweist und die Öffnung mit einer Abdeckklappe (8, 9) versehen ist, die die Öffnung (2, 3) wenigstens teilweise abdecken kann, wobei ein Förderer vorhanden ist, so beispielsweise eine Unterkette (6) oder ein Förderband, mit dem das Futter auf die Öffnung (2, 3) zu verschoben werden kann, und die Abdeckklappe (8, 9) der Öffnung (2, 3) ferngesteuert werden kann, **dadurch gekennzeichnet**, daß die Abdeckklappe (8, 9) der Öffnung mit einem Steuermechanismus (19) gesteuert wird, der durch die Fernsteuerung (16) betätigt wird, wobei der Steuermechanismus (19) einen hydraulischen Steuerzylinder (20, 21) zur Betätigung der Abdeckklappe (8, 9) und ein hydraulisches Ventil (28, 31, 41, 42)) enthält, das den Förderantrieb (15) abschaltet, wenn sich die Abdeckklappe (8, 9) nicht in ihrer vollständig oder nahezu vollständig offenen Position befindet.

2. Vorrichtung nach Anspruch 1, wobei die Vorrichtung mit mindestens zwei Öffnungen (2, 3) zur Abgabe von Futter versehen ist und jede der beiden Öffnungen (2, 3) mit einer ferngesteuerten Abdeckklappe (8, 9) versehen ist, die die Öffnung (2, 3) wenigstens teilweise abdecken kann, **dadurch gekennzeichnet**, daß Arretiereinrichtungen vorhanden sind, die das Öffnen einer Abdeckklappe (8, 9) verhindern, wenn die andere Abdeckklappe (8, 9) offen ist.

3. Vorrichtung nach einem der vorangehenden Ansprüche, **dadurch gekennzeichnet**, daß der hydraulische Steuerzylinder (20) für eine Abdeckklappe (8, 9) eine erste Position hat, in der die Abdeckklappe (8, 9) offen ist, eine zweite Position, in der die Abdeckklappe (8, 9) geschlossen ist, und eine dritte Position, in der die Abdeckklappe (8, 9) in der geschlossenen Position arretiert ist.

4. Vorrichtung nach Anspruch 3, **dadurch gekennzeichnet**, daß der hydraulische Steuerzylinder (20) mit einer Federeinrichtung (24) so verbunden ist, daß in der zweiten Position die Abdeckklappe (8, 9) gegen Federspannung geöffnet werden kann.

5. Vorrichtung nach einem der Ansprüche 2-4, **dadurch gekennzeichnet**, daß die beiden Abdeckklappen (8, 9) über mechanische Einrichtungen (21, 22, 26) miteinander verbunden sind, um die Arretierung zu bewirken.

6. Vorrichtung nach einem der Ansprüche 2-5, **dadurch gekennzeichnet**, daß die beiden Abdeckklappen (8, 9) mit dem hydraulischen Steuerzylinder (20) gesteuert werden, der eine Bewegung aus einer Mittelposition in zwei Richtungen bewirken kann, wobei bei Bewegung in beiden Richtungen eine Abdeckklappe (8, 9) geöffnet wird und die andere Abdeckklappe (9, 8) arretiert wird.

7. Vorrichtung nach einem der vorangehenden Ansprüche, **dadurch gekennzeichnet**, daß die Abdeckklappe (8, 9) um eine im wesentlichen horizontale Schwenkachse geschwenkt wird, die sich über der Öffnung (2, 3) befindet, und daß die Abdeckklappe (8, 9) auf beiden Seiten mit Schutzblechen (11) versehen ist, die sich im wesentlichen senkrecht zu der Schwenkachse erstrecken, wobei die Schutzbleche (11) die Öffnung (2, 3) in der offenen Position der Abdeckklappe (8, 9) teilweise abschirmen.

8. Vorrichtung nach Anspruch 7, **dadurch gekennzeichnet**, daß die Abmessungen wenigstens eines der Schutzbleche (11) auf fächerartige Weise verringert werden können.

9. Vorrichtung nach einem der Ansprüche 2-8, **dadurch gekennzeichnet**, daß die Fördereinrichtung (6) in zwei Richtungen angetrieben werden kann, das heißt in jeder Richtung zur Zufuhr von Futter zu einer der Öffnungen (2, 3), wobei das Hydraulikventil (28) eine Ruheposition aufweist, in der der Antrieb der Fördereinrichtung (6) arretiert ist und die beiden Abdeckklappen (8, 9) geschlossen sind, und zwei Arbeitspositionen, in denen jeweils eine Abdeckklappe (8, 9) offen ist, während die andere Abdeckklappe (9, 8) arretiert ist und die Fördereinrichtung (6) in der Richtung der offenen Abdeckklappe (8, 9) angetrieben wird.

10. Vorrichtung nach Anspruch 9, **dadurch gekennzeichnet**, daß in der Nähe jeder Öffnung (2, 3) eine angetriebene mechanische Vorrichtung (4) vorhanden ist, um das abzugebende Futter zu behandeln bzw. zu dosieren, und daß mit der gleichen Fernsteuerung (16) die Vorrichtung (4) und die Fördereinrichtung (6) sowie die Abdeckklappen (8, 9) gesteuert werden.

11. Verfahren zum Transport und zur Abgabe von Futter oder dergleichen Material, so beispielsweise Silagematerial, bei dem das Futter aus einem der Vorratsbehälter über eine Öffnung (2, 3) mittels einer Fördereinrichtung (6) abgegeben wird, wobei eine Abdeckklappe (8, 9) der Öffnung (2, 3) durch einen Steuermechanismus (19) geöffnet worden ist, der von einer Fernsteuerung (16) gesteuert wird, und der Steuermechanismus den Förderantrieb (15) so steuert, daß der Antrieb abgeschaltet wird, wenn die Abdeckklappe (8, 9) um eine bestimmte Strecke aus der vollständig offenen Position bewegt wird.

12. Verfahren nach Anspruch 11, **dadurch gekennzeichnet**, daß, wenn eine Abdeckklappe (8, 9) der Öffnung (2, 3) geöffnet worden ist, gleichzeitig das Öffnen der Abdeckklappe (8, 9) einer anderen Öffnung (2, 3) verhindert wird.

13. Verfahren nach Anspruch 11 oder 12, **dadurch gekennzeichnet**, daß der Steuermechanismus (19) eine Position hat, in der eine Abdeckklappe (8, 9) von Hand geöffnet werden kann, und der Steuermechanismus (19) den Förderantrieb (15) und/oder eine weitere mechanische Vorrichtung arretiert, wenn sich der Steuermechanismus (19) in der Position befindet.

## Revendications

1. Un dispositif pour transporter et décharger du fourrage ou matériau similaire, par exemple un matériau ensilé, ledit dispositif étant mobile et comportant au moins une ouverture (2, 3) pour décharger le fourrage, ladite ouverture étant équipée d'un couvercle rabattable (8, 9) qui est susceptible de recouvrir ait moins en partie l'ouverture (2, 3), dans lequel est prévu un transporteur, par exemple une chaîne de fond (6) ou un transporteur à bandes, qui est susceptible de déplacer le fourrage vers l'ouverture (2, 3), dans lequel le couvercle rabattable (8, 9) de l'ouverture (2, 3) peut être entraîné par commande à distance (16), caractérisé en ce que le couvercle rabattable (8, 9) est commandé par un mécanisme de commande (19) entraîné par la commande à distance (16), lequel mécanisme de commande (19) comprend un vérin hydraulique de commande (20, 21) pour actionner le couvercle rabattable (8, 9) et une vanne hydraulique (28, 31, 41, 42) pour arrêter les moyens d'entraînement (15) du transporteur lorsque le couvercle rabattable (8, 9) n'est pas entièrement ou presque entièrement dans sa position ouverte.

2. Un dispositif selon la revendication 1, ledit dispositif étant muni d'au moins deux ouvertures (2, 3) pour décharger le fourrage, dans lequel chacune desdites deux ouvertures (2, 3) est pourvue d'un couvercle rabattable (8, 9) commandé à distance, qui peut au moins en partie recouvrir les ouvertures (2, 3), caractérisé en ce que des moyens de verrouillage sont prévus, qui verrouillent un couvercle rabattable (8, 9) pour l'empêcher de s'ouvrir lorsque le second couvercle rabattable (8, 9) est ouvert.

3. Un dispositif selon l'une quelconque des revendications précédentes, caractérisé en ce que le vérin hydraulique de commande (20) pour un couvercle rabattable (8, 9) a une première position, dans laquelle le couvercle rabattable (8, 9) est ouvert, une deuxième position, dans laquelle le couvercle rabattable (8, 9) est fermé, et une troisième position, dans laquelle le couvercle rabattable (8, 9) est verrouillé dans la position fermée.

4. Un dispositif selon la revendication 3, caractérisé en ce que ledit vérin hydraulique de commande (20) est relié à des moyens de ressort (24), de telle sorte que dans ladite deuxième position, le couvercle rabattable (8, 9) puisse être ouvert à l'encontre de la tension de ressort.

5. Un dispositif selon l'une quelconque des revendications 2 à 4, caractérisé en ce que les deux couvercles rabattables (8, 9) sont reliés entre eux par des moyens mécaniques (21, 22, 26) afin de réaliser ledit verrouillage.

6. Un dispositif selon l'une quelconque des revendications 2 à 5, caractérisé en ce que les deux couvercles rabattables (8, 9) sont commandés au moyen du vérin hydraulique de commande (20), qui peut effectuer un mouvement à partir d'une position centrale dans deux directions, ledit mouvement dans chaque direction ouvrant un couvercle rabattable (8, 9) et verrouillant l'autre couvercle rabattable (9, 8).

7. Un dispositif selon l'une quelconque des revendications précédentes, caractérisé en ce que le couvercle rabattable (8, 9) pivote autour d'un axe de pivotement sensiblement horizontal, qui est disposé au-dessus de l'ouverture (2, 3), et en ce que ledit couvercle rabattable (8, 9) est pourvu de chaque côté de plaques de protection (11) s'étendant sensiblement perpendiculairement audit axe de pivotement, lesdites plaques de protection (11) masquant en partie l'ouverture (2, 3) dans la position ouverte du couvercle rabattable (8, 9).

8. Un dispositif selon la revendication 7, caractérisé en ce qu'au moins une desdites plaques de protection (11) peut être réduite dimensionnellement à la façon d'un éventail.

9. Un dispositif selon l'une quelconque des revendications 2 à 8, caractérisé en ce que ledit transporteur (6) peut être entraîné dans deux directions, dans chaque direction pour décharger le fourrage vers l'une des ouvertures (2, 3), dans lequel la vanne hydraulique (28) a une position de repos, dans laquelle l'entraînement du transporteur (6) est verrouillé et les deux couvercles rabattables (8, 9) sont fermés, et deux positions de fonctionnement, dans lesquelles respectivement un couvercle rabattable (8, 9) est ouvert, tandis que l'autre couvercle rabattable (9, 8) est verrouillé et le transporteur (6) est entraîné dans la direction du couvercle rabattable (8, 9) ouvert.

10. Un dispositif selon la revendication 9, caractérisé en ce que près de chaque ouverture (2, 3) est prévu un dispositif mécanique à entraînement (4) pour traiter ou doser le fourrage à décharger et en ce que la même commande à distance (16) commande ledit dispositif (4) et le transporteur (6) et les couvercles rabattables (8, 9).

11. Une méthode pour transporter et décharger le fourrage ou matériau similaire, par exemple un matériau ensilé, dans lequel le fourrage est déchargé à partir d'une trémie à travers une ouverture (2, 3) au moyen d'un transporteur (6), dans lequel un couvercle rabattable (8, 9) de l'ouverture (2, 3) est ouvert par un mécanisme de commande (19) qui est commandé par une commande à distance (16), ledit mécanisme de commande (19) commandant les moyens d'entraînement (15) du transporteur, de telle sorte que lesdits moyens d'entraînement sont arrêtés lorsque le couvercle rabattable (8, 9) est déplacé d'une distance prédéterminée par rapport à la position entièrement ouverte.

12. Une méthode selon la revendication 11, caractérisée en ce que, lorsqu'un couvercle rabattable (8, 9) de l'ouverture (2, 3) est ouvert, le couvercle rabattable (9, 8) d'une autre ouverture (3, 2) est en même temps verrouillé pour l'empêcher de s'ouvrir.

13. Une méthode selon la revendication 11 ou 12, caractérisée en ce que ledit mécanisme de commande (19) a une position dans laquelle un couvercle rabattable (8, 9) peut être ouvert à la main et en ce que ledit mécanisme de commande (19) bloque les moyens d'entraînement (15) du transporteur et/ou d'un autre mécanisme lorsque ledit mécanisme de commande (19) est dans ladite position.
